Europäisches Patentamt

European Patent Office

Office européen des brevets

(11) Publication number: **0 214 688**
**B1**

(12) **EUROPEAN PATENT SPECIFICATION**

(45) Date of publication of patent specification: **28.03.90**

(51) Int. Cl.⁵: **B 21 K 1/70, F 16 B 39/28**

(21) Application number: **86201478.4**

(22) Date of filing: **28.08.86**

(54) A method, a die and a device for manufacturing a self locking nut.

(30) Priority: **03.09.85 NL 8502413**

(43) Date of publication of application:
**18.03.87 Bulletin 87/12**

(45) Publication of the grant of the patent:
**28.03.90 Bulletin 90/13**

(84) Designated Contracting States:
**BE DE FR GB IT NL SE**

(56) References cited:
**GB-A- 708 281**
**GB-A-1 485 850**
**US-A-1 501 766**
**US-A-2 501 040**
**US-A-2 592 128**
**US-A-2 743 466**
**US-A-2 859 459**
**US-A-3 455 361**
**US-A-3 456 704**
**US-A-3 734 156**
**US-A-3 989 082**

(73) Proprietor: **NEDSCHROEF WEERT B.V.**
**Graafschap Hornelaan 133 P.O. Box 153**
**NL-6000 AD Weert (NL)**
(73) Proprietor: **de Boer, Klaas Willem**
**Kazernelaan 2**
**NL-6006 LW Weert (NL)**

(72) Inventor: **de Boer, Klaas Willem**
**Kazernelaan 2**
**NL-6006 LW Weert (NL)**
Inventor: **Linders, Joannes H.G.**
**de Riet 5**
**NL-6034 RM Nederweert (NL)**

(74) Representative: **Kooy, Leendert Willem et al**
**OCTROOIBUREAU VRIESENDORP & GAADE**
**P.O. Box 266**
**NL-2501 AW The Hague (NL)**

Courier Press, Leamington Spa, England.

EP 0 214 688 B1

## Description

The invention relates to a method, die and device for making a self-locking nut, by providing inwardly directed chambers in the flat tool surfaces of the nut and providing a recessed cavity into the wall of at least one inwardly directed chamber bordering the thread.

Such a method is known from U.S. patent specification 3 456 704. In this known method a recessed cavity is provided in two diametrically opposite chambers or in three inwardly directed chambers spaced at a mutual peripheral angle of 120° by radially inwards and downwards deforming from above a portion of the wall bordering the thread of the inwardly directed chambers.

The major disadvantage of this known deformation method is that any content differences among the nuts, when pressing the nuts, practically entirely lead to differences in heights among the nuts. Owing to content differences in the presses for the nuts in the cutting station the smallest attainable nut height difference still always is some tenths of a millimeter. These height differences cause important differences of the securing torque. These differences are bigger than the acceptable tolerances according to DIN/ Nenorm standards and buyers' specifications.

The object of the invention is to eliminate this disadvantage of the known method.

According to the invention this object has been achieved by the feature that every recessed cavity is provided by radially inwardly deforming a portion of the said wall of the inwardly directed chamber by means of a radially inwardly movable deformation element.

Contrary to the height differences among the nuts the differences in radial direction are quite small, in particular in the distance between each flat tool surface and the centerline of the nuts, consequently also the differences in the distances among the walls of the inwardly directed chambers and the centerline of the nuts, i.e. in the order of some hundredths of a millimeter. In the method of the invention a portion of the wall bordering the thread of the inwardly directed chamber is deformed by a radially inward movement, thus in the direction of the smallest size differences, which causes extremely small variations in securing torque, i.e. in the torque to be exerted on the fastened nut to release it. The method of the invention provides a lock nut amply meeting the DIN/Nenorm standards, as well as the specifications of the processing industries.

The invention also relates to a die for making a self-locking nut, said die being provided with a polygonal cavity.

The die of the invention is characterized in that the die cavity is provided with a set back rib at one outer end of each side face and that each rib is provided with a substantially convex cylindrical surface.

With the die of the invention the inwardly directed chambers are radially created by the set back ribs, i.e. in the direction of the smallest size differences of the nut. The result of providing a recessed deformation cavity into a wall of one or more inwardly directed chambers is that one always starts from a radial distance between that wall and the centerline of the nut, showing tiny size differences, so that the securing torque of the nut can be determined within quite small tolerances.

Finally the invention relates to a device for providing a recessed cavity into the wall of at least one inwardly directed chamber in a flat tool surface of a nut, said device being equipped with a mechanism for mounting the nut in the desired position and a deformation mechanism having at least one inwardly protruding deformation element wherein the deformation element is radially inwardly movably mounted in the cylinder-shaped deformation mechanism.

Such a device is known from U.S. patent specification 3 456 704. This known device comprises a rod-shaped punch which at a cross sectional end surface is provided with two or three deformation teeth axially protruding from the cross sectional end surface and uniformly spaced over the periphery of the cross sectional end surface, said deformation teeth defining in the interior a truncated cone-shaped surface, the top angle thereof being greater than the top angle of the truncated cone which is defined by the walls of the inwardly directed chambers in the nut bordering the thread. The top angle of the truncated cone defined by the teeth is between 66° and 68°, whereas the top angle defined by the walls of the inwardly directed chambers is 60°.

The axially protruding teeth of the punch engaging the top edge of the walls of the inwardly directed chambers are axially pressed against the nut, so that a recessed deformation cavity is formed at the top portion of the wall of two or three inwardly directed chambers. The material of the nut is at least partially deformed in axial or height direction, i.e. in the direction of the biggest size differences. This results in too great variations of the securing torque of the self-locking nut and the tolerances allowable according to the DIN/Nenorm standards are no longer met.

The device of the invention is distinguished over the device known from U.S. patent specification 3 456 704 in that the deformation element comprises a lever-shaped segment which is pivotable in a longitudinal central plane of the nut around a cross shaft in the deformation mechanism, said shaft being shiftable in a direction parallel to the longitudinal central plane, said segment being resiliently pretensioned at the side of the pivoting shaft positioned opposite the side of the nut in the rotational direction towards the longitudinal centerline of the nut and on the other hand is secured at the interior of a chisel-shaped deformation element and that the segment engages the top surface of supports at the side positioned in front of the nut between which supports the nut is locked.

By the device of the invention a lock nut is produced, wherein the deformation cavit(y)(ies) are formed exactly radially inwardly, in which direction the size differences are quite small, in the order of some hundredths of a millimeter. This results in making a lock nut having quite small securing torque tolerances, amply satisfying the set standards and specifications of the processing industries.

The invention will be elucidated in detail along the lines of the drawing with some embodiments.

(Vide further the application documents as published, page 5, lines 6 f.f.).

Figure 1 is a top plan view of the lock nut having two deformation cavities of the invention;

Figure 2 is a side view of the lock nut of Figure 1;

Figure 3 is a cross-section on a larger scale along the line III—III in Figure 1;

Figure 4 is a cross-section along the line IV—IV in Figure 1;

Figure 5 is a top view of the lock nut having three deformation cavities according to the invention;

Figure 6 is an axial cross-section of the die of the invention for making the lock nuts;

Figure 7 is a top view of the die of Figure 6;

Figure 8 is a cross-section of the die along the line VIII—VIII in Figure 7;

Figure 9 is a top view of the device for providing two recessed cavities in the lock nut of Figure 1;

Figure 10 is a cross-section along the line X—X in Figure 9; and

Figure 11 is a perspective view of the device for providing three recessed deformation cavities in the lock nut of Figure 5.

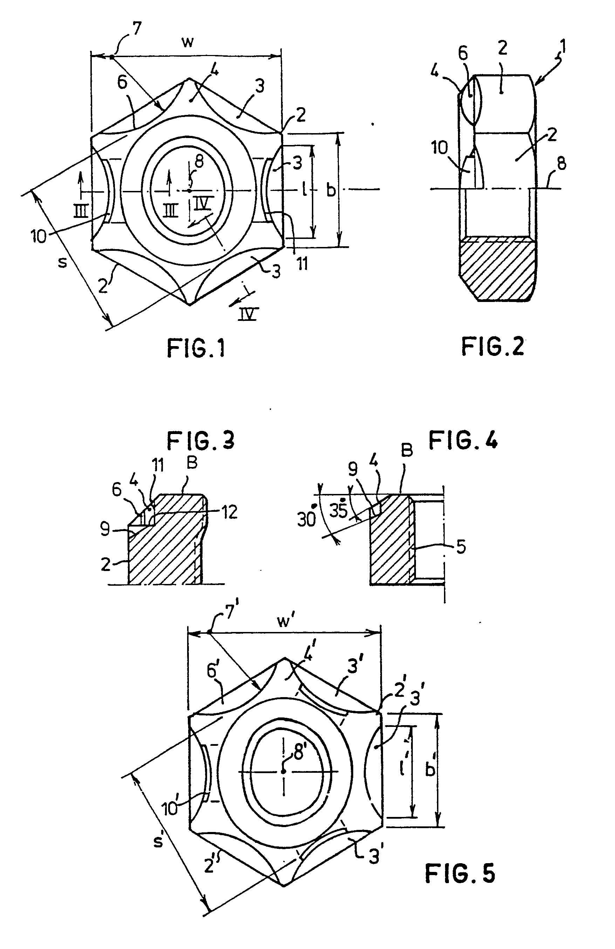

Each flattened tool surface 2 of the lock nut 1 shown in Figures 1 through 4 inclusive is provided at the top side B i.e. at the side which during use of the lock nut is faced away from the part to be secured, with an inwardly directed chamber 3 extending over the major part of the width b of the flattened tool surface 2. The top side B of the lock nut 1 is provided with a truncated cone 4 having a top angle varying from 90° to 130°, the inwardly directed chambers 3 being substantially formed in the truncated cone 4. Owing to the top angle of 90° to 130° of the truncated cone 4 having an inclination angle with respect to the horizontal plane between 45° and 25°, the lock nut can efficiently be cold-pressed, as described hereafter. The top angle of the truncated cone 4 is preferably 110°.

Every inwardly directed chamber at its interior, thus at the side of the thread 5, is delimited by a substantially cylindrical, concave wall 6, the centerline 7 thereof being parallel to the centerline 8 of the thread 5, the relationship between the radius R and the diameter of the thread 5 of the lock nut 1 being approximately between 1.5 and 2.5:3, preferably 2:3, and at the bottom side by a concave cone-shaped surface 9 having a top angle varying between 100° and 140°, and preferably being 120°, as will be elucidated hereafter in detail.

The recessed cavities at the top side B of the lock nut 1 of Figures 1 through 4 inclusive are provided at two diametrically opposite flattened tool surfaces 2, into the substantially cylindrical, concave wall 6 of both inwardly directed chambers 3 at those flattened tool surfaces.

The recessed cavity 10 extends over the major portion of the length 1 of the inwardly directed chamber 3, measured on a plane perpendicular to the centerline of the lock nut 1.

The recessed cavities 10 are formed by a radially inward movement of the major portion of the length 1 of the cylindrical wall 6 of the inwardly directed chamber 3. The recessed cavities 10 at the side of the thread 5 are delimited by a concave, substantially cylindrical wall 11 being substantially parallel to the cylindrical wall 6 of the inwardly directed chambers 3, and at the lower side by a plane 12 perpendicular to the centerline 8 of the thread 5. The radius of the cylindrical wall 11 of the recessed cavity 10 is substantially equal to the radius R of the cylindrical wall 6 of the inwardly directed chambers 3.

The self-locking nut 1' of Figure 5 substantially corresponds with the lock nut 1 of Figures 1 through 4 inclusive, however, instead of two, three recessed deformation cavities 10' are formed in three inwardly directed chambers being formed at the top side B' of three spaced flattened tool surfaces 2' at a mutual peripheral angle of 120°. The recessed deformation cavities 10' in the lock nut 1' are provided in the same location in the flattened tool surface 2', in the same position and in the same shape as the recessed deformation cavities 10 in the flattened tool surfaces 2 of the lock nut discussed above. The same applies to the inwardly directed chambers 3'.

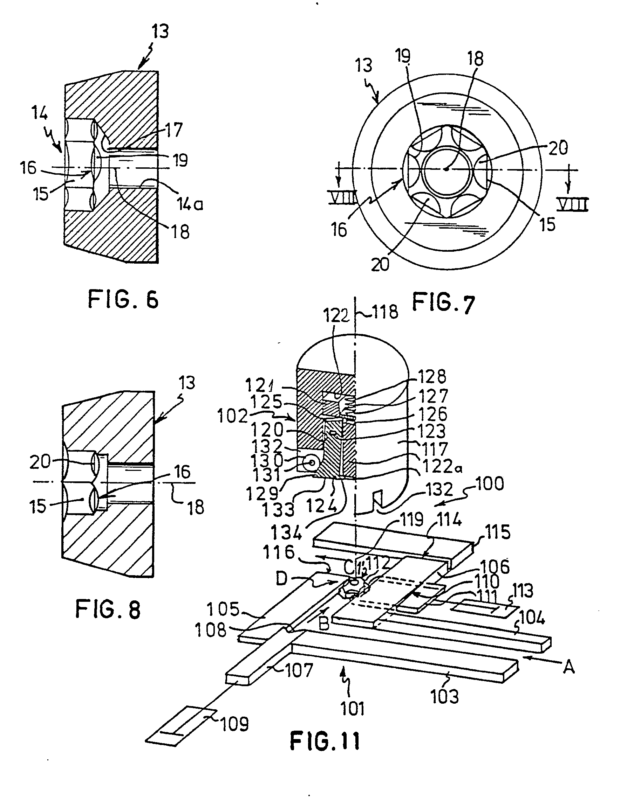

A die 13 for making the lock nuts 1 and 1' of Figures 1 through 4 inclusive and 5, i.e. for forming the truncated cones 4 and 4' and the inwardly directed chambers 3 and 3', is shown in Figures 6 through 8 inclusive. The die 13 has a hexagonal cavity 14 with hexagonal surfaces 15.

According to the invention the die cavity 14 is provided at the lower side of every hexagonal surface 15 with a recessed rib 16 serving for the forming of inwardly directed chambers 3 and 3'.

The die cavity 14 is bordered at its lower side by a concave, truncated conical wall 17, serving for the forming of the truncated cones 4 and 4' at the top side B and B' respectively of the lock nuts 1 and 1' and also has a top angle varying between 90° and 130°, so that cold-pressing the lock nuts 1 and 1' with the die 13 can take place under optimal conditions, the top angle of the truncated conical wall 17 being preferably 110°.

The recessed ribs 16 are mainly situated upon the truncated conical wall 17 and are provided at the side of the centerline 18 with a substantially convex-cylindrical surface 19, the centerline of said cylinder being parallel to the centerline 18 of the die cavity 14, said surface 19 serving for the forming of the cylindrical walls 6 and 6' of the inwardly directed chambers 3 and 3' of the lock nuts 1 and 1'. The recessed ribs 16 have a convex cone-curved surface 20 at the side facing away from the truncated, conical wall 17 the top angle thereof varying between 100° and 140° and preferably being 120°, serving for the forming of the concave cone-curved surfaces 9 and 9' of the inwardly directed chambers 3 and 3' of the lock nuts 1 and 1'. This top angle of 120° of the convex cone-curved surface 20 guarantees an optimal duration of life of the die 13, when making the lock nuts 1 and 1' of the invention.

Further in the die of the invention the relationship between the radius of the convex-cylindrical side 19 of the recessed ribs 16 and the diameter of the thread 5, 5' of the lock nut 1, 1' to be made by the die 13 is between approximately 1.5 and 2.5:3, preferably 2:3, thus identical to the relationship between the complementary parts of the lock nuts 1 and 1'.

Further the die 13 is provided with a bore 14a in line with the die cavity 14 and coaxially therewith, said bore serving as guideway for the ejection pin in the die 13 of the machine for cold pressing the lock nuts 1 and 1' of the invention.

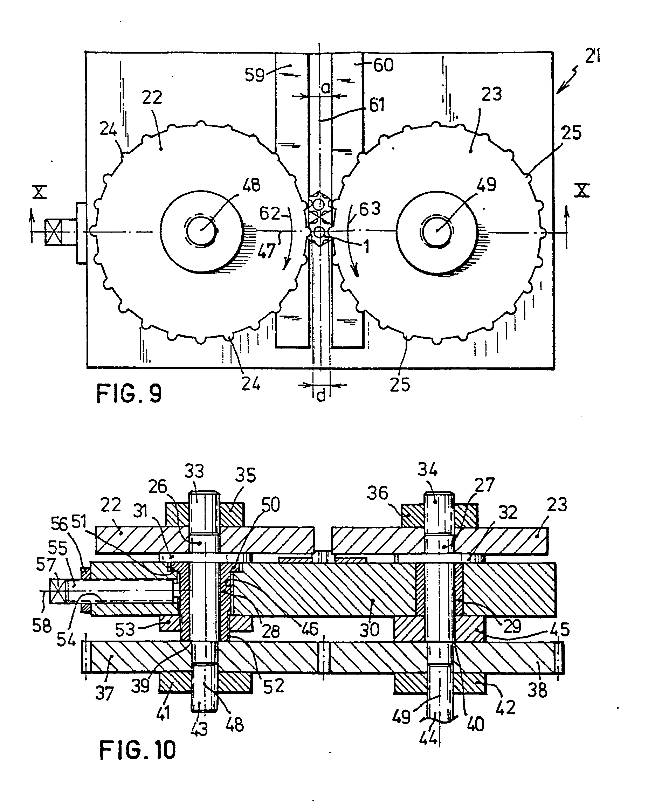

Figures 9 and 10 show a device 21 for providing recessed cavities 10 into two diametrically opposed flattened tool surfaces 2 of the lock nut 1.

According to the invention the device 21 is provided with a pair of interspaced, synchronous and in opposite rotational direction driven wheels 22 and 23, the centerlines 48 and 49 respectively thereof, being parallel and their peripheries being provided with spaced radial cams 24 and 25 respectively and with a guide 59, 60 for the lock nuts 1.

The cams 24 and 25 have partial cylindrical shapes the centerlines of said cylindrical shapes being parallel to those of the wheels 22 and 23. The wheels 22 and 23 are completely identical and are mounted on parallel shafts 26 and 27 respectively, being mounted by means of slide bearings 28 and 29 respectively in a base plate 30. The wheels 22 and 23 are keyed or secured in another way, so that they cannot rotate with respect to the shafts 26 and 27 (not shown). The shafts 26 and 27 are provided with molded one piece flanges 31 and 32 respectively and with threaded outer ends 33 and 34 respectively, upon which a lock nut 35 and 36 respectively is screwed, axially locking the wheels 22 and 23.

On the shafts 26 and 27 at the other side of the base plate 30 a pair of gears 37 and 38 respectively of the same dimension and with the same gearing is mounted. The gears 37 and 38 can also be keyed upon the shafts 26 and 27 respectively and the gears 37 and 38 are axially secured between a shoulder 39 and 40 respectively of the shafts 26 and 27 and a lock nut 41 and 42 respectively being screwed on the threaded shaft parts 43 and 44 respectively. The shaft part 44 is extended and connected to a motor (not shown).

A packing ring 45 is mounted to the shaft 27 between the base plate 30 and the gear 38, the thickness of the ring being equal to the distance between the base plate 30 and the shoulder 40 on the shaft 27. The length of the slide bearing 29 is equal to the thickness of the base plate 30.

The slide bearing 28 of the shaft 26 is mounted in a bore 46 in the base plate 30 which bore has a greater diameter than the external diameter of the bearing 28, or in an elongated opening 46, the width thereof being equal to the diameter of the bearing 28 and the longitudinal centerline thereof coinciding with the connection line 47 between the centerlines 48 and 49 of the shafts 26 and 27.

The slide bearing 28 is provided at the side of the wheel 22 with a flange 50 situated in a portion 51 of the bore respectively the elongated opening 46 having a greater size. The slide bearing 28 protrudes from the base plate 30 at the side of the gear 37 and is provided at that location with an external thread 52, upon which a lock nut 53 is screwed. The length of the part protruding from the base plate 30 is equal to the thickness of the packing ring 45 on the shaft 27.

At the side of the shaft 26 with the slide bearing 28 in a plane perpendicular to the centerline 48 of the shaft 26 an internally threaded bore 54 is provided, wherein a set bolt 55 is screwed which is secured with a lock nut 56. The set bolt 55 is provided with a quadrangular or hexagonal end part 57. The centerline 58 of the bore 54 of the set bolt 55 is preferably within the cross-sectional plane X—X in Figure 9.

The device 21 of the Figures 9 and 10 is further provided with a guideway comprising two parallel guide rails 59 and 60 of the base plate 30, said guide rails 59 and 60 being parallel to the perpendicular 61 on the connection line 47 between the centerlines 48 and 49 of the cam wheels 22 and 23, the distance a between the guide rails 59 and 60 corresponding to the flattened-tool-surface width w of the lock nut 1, measured over two opposed tool surfaces.

Because an inwardly directed chamber 6 is provided at the top side B of each flattened tool surface. The lock nut 1 can be guided between the guide rails 59 and 60 in any of the three possible positions.

When operating the device 21, the cam wheels 22 and 23 rotate in the directions indicated by the arrows 62 and 63 respectively. Therewith the cams 24 and 25 engage the inwardly directed chambers 3 of the lock nuts 1.

When two cams 24 and 25 are opposite each other in the cross-sectional plane X—X in Figure 9, the smallest distance d between the cams 24 and 25 is smaller than the smallest distance s between the cylindrical concave walls 6 of the chambers 3 in the lock nuts 1.

The cylindrical concave walls 6 of two opposite chambers 3 are pressed radially inwardly over a distance equal to 1/2 (s-d).

The lower defining edge of the cams 24 and 25 is engaging approximately at the level of the intersecting line between the cylindrical concave walls 6 and the concave cone-curved surfaces 9 of the inwardly directed chambers 3 of the walls 6.

For providing the recessed cavities 10 into the lock nuts 1 of various sizes the distance $a$ between the guide rails 59 and 60 is adjustable, the distance between the cam wheels 22 and 23 and the base plate 30 being adjustable by means of packing rings on the shafts 26 and 27 and the shaft 26 being adjustable by means of the set bolt 55.

Furthermore in case of greater variations in size the cam wheels 22 and 23, the guide rails 59 and 60 and the gears 37 and 38 can also be exchangeable.

The gearing of the gears 37 and 38 is such that with a small movement of the shaft 26 with respect to the shaft 27 which can for example be necessary to change from nuts with thread M6 to nuts of 1/4 inch, the gearings of the gears 37 and 38 are engaging peripherally without clearance.

When the device 21 is for example to be switched from nuts M8 to nuts M10, then the cam wheels 22 and 23, the gears 37 and 38 and optionally also the guide rails 59 and 60 are to be exchanged. Further the shaft 26 is evidently to be moved with respect to the shaft 27 and the cam wheels 22 and 23 are to be positioned at a greater distance of the base plate 30.

The device 100 of Figure 11 serves for providing a recessed deformation cavity 10' into the wall 6' of three inwardly directed chambers 3' in the self-locking nut 1' of Figure 5.

The device 100 comprises a guideway and a fastening mechanism 101 for the lock nuts 1' and a deformation mechanism 102.

The complete guideway and fastening mechanism 101 is arranged in the direction of the arrows A and C under an angle of inclination of 30° in downward direction with respect to the horizontal plane, thus adopted to convey the nuts by means of gravity. The mechanism 101 comprises two parallel guide rails 103 and 104, between which the nuts 1 are fed by means of gravity and conveyed in the direction of the arrow $A$, two flattened tool surfaces contacting each other. The distance between the guide rails 103 and 104 is somewhat larger than the diagonal dimension $m'$ of the lock nuts 1' of Figure 5.

The guide rails 103 and 104 are joined at an angle of 90° to two parallel guide rails 105 and 106, the distance between those rails being somewhat greater than the flattened tool-surface width $w'$ of the lock nut 1'. The angular points of two flattened tool surfaces of the nuts 1' contact each other between the guide rails 105 and 106. The lock nuts 1' are transported one by one between the two guide rails 105 and 106 in the direction of the arrow $B$ by means of a feeding block 107, which is provided at the side positioned in front of the nuts 1' with a V-shaped recess 108, the defining surfaces thereof being at an angle of 120°. The feeding block 107 is connected with a double-acting pneumatic cylinder 109, the number of strokes per minute being adjusted to the production capacity of the device 100.

The feeding block 107 is moving the nuts 1' to the deformation position $D$ of a lock nut 1' shown in Figure 11, in which position $D$ in a recess 110 in the lower side of the guide rail 106 a location plate 111 is mounted, having at the side positioned in front of the lock nut 1' a recess 112 having three flattened surfaces mutually being under an angle of 120°, and the central plane thereof having a width which is equal to the width $b'$ of a flattened tool surface 2' of the lock nut 1', so that the lock nut 1' can be fixed in the right location and in the right position with respect to the deformation mechanism 102 to be described hereafter.

The location plate 111 is connected with a double-acting pneumatic cylinder 113, the number of strokes per minute of which also being adjusted to the production capacity of the device 100.

The end edge 114 of the guide rail 106 is extended at an angle of 90° by a guide rail 115, the distance between the guide rail 115 and the end edge 116 of the guide rail 105 being somewhat larger than the diagonal dimension $m'$ of the lock nuts 1'.

When a lock nut 1' is deformed by the deformation mechanism 102 in the deformation station $D$ the next lock nut 1' is fed by the feeding block 107 in the direction of the arrow $B$, the said next lock nut pushing the already deformed lock nut out of the deformation station $D$ and the latter being discharged between the end surface 116 of the guide rails 105 and the guide rail 115 in the direction of the arrow $C$ due to the gravity.

The deformation mechanism 102 is mounted in a cylindrical housing having a U-shaped longitudinal cross-section, its longitudinal centerline 108 being in the extension of the centerline 119 of the thread 5' of the lock nut 1' in the deformation station $D$, is perpendicular to the flat top surfaces of the guide rails 105 and 106 and thus at an angle of 30° with the vertical.

The housing 117 has a blind concentrical bore 120 with a side wall 121 and a bottom 122. A concentrical core 122a is axially-movably mounted in the bore 120 over a 10 mm distance, said core being secured in the bore 120 by a locking bolt extending in an axial slot (not shown) in the peripheral surface of the core 122a.

In the core 122a three cross-shafts 123 are mounted at the same level which shafts across the longitudinal centerline 118 of the housing 117 in a perpendicular way and are spaced apart at a mutual peripheral angle of 120°. The outer ends of the cross-shafts 123 are secured in traverse holes (not shown) in the core 122a.

A lever-shaped segment 124 is mounted on every cross-shaft 123, which segment is pivotable in a longitudinal central plane of the housing 117 (and thus of the lock nut 1') around a cross-shaft 123. Each segment is defined at the side of the pivoting shaft 123 opposite the lock nut 1', by a radially inwardly and upwardly inclining surface 125, supporting a pressure plate 127 upon its radial inner edge 126, said plate housing a pretensioned pressure spring 128 between the plate and the bottom 121 of the housing 117.

The exterior of each lever-shaped segment 124 at the side of the pivoting shaft 123 positioned in front of the lock nut 1', is provided with an inclining surface 129 engaging a roll 130 rotatably mounted on a cross-shaft 131 in a radial slot 132 of the housing 117. The roll 130 and the slot 132 are in the same longitudinal central plane of the housing 117 as the mating lever-shaped segment 124, the lowermost trapezoidal part of the segment 124 partially extending in the radial slot 132.

The exterior of each lever-shaped segment 124 at its lower edge 133 positioned in front of the lock nut 1', is provided with a radially protruding deformation cam 134, which at the side positioned in front of the centerline 118 is provided with a convex defining surface 135, its width and its height corresponding with those of the recessed deformation cavities 10' in the lock nut 1'.

The working mode of the device of Figure 11 assuming that a lock nut 1' is fixed in the deformation station D of the mechanism 101, is as follows.

When using the device the deformation mechanism 102 is mounted at the top punch of a press, in particular an excenter press, and the guideway and fastening mechanism 101 is mounted on the bottom punch of the press (not shown). The guide rails 105 and 106 have a thickness equal to the height of the lock nut 1', reduced with the height of the deformation cavities 10'.

Before starting the downward stroke of the top punch of the press with the mechanism 102, the core 122 with the segments 124 is maintained by the pressure spring 128 in the lowermost position in the bore 120, the lower ends of the segments 124 together with the inclining surfaces 129 being maintained in outward direction pressed against the rolls 130 and the segments 124 at least protruding over the axial height of the deformation cam 134 below the housing 117.

When the top punch of the press is making a downward stroke, the lower edge 133 of each segment 124 is pressed against the flat top surface of the guide rails 105 and 106, so that the segments 124 and the core 122a are axially inwardly pressed into the bore 120 against the action of the pressure spring 128 and owing to the upwards movement of the roll 130 on the inclining surface 129, the lower edges 133 with the deformation cams 134 of the segments 124 are pressed radially inwardly movably, so that the deformation cams 134 produce radially inwardly movably the deformation cavities 10' into the wall 6' of the inwardly directed chambers 3'.

The radial depth of the deformation cavity 10' in the lock nut 1', predetermining the degree of deformation of the thread 5' thereof, and thus the torque needed to detach the lock nut 1' is predetermined by the magnitude of the radially inward movement of the deformation cams 134. In its turn the latter is determined by the stroke length of the housing 117, respectively of the top punch of the press. The stroke length of the top punch of the press is quite accurately adjustable with a thread connection (not shown).

During the upward stroke of the top punch of the press the lever-segments 124 are pressed axially downwards out of the housing 117 and simultaneously at their lower ends moved radially outwards by descending of the rolls 130 from the inclining surfaces 129, until the said lock bolt with its projecting point is reaching the upper end of the slot provided in the core 122 (not shown).

To enable the making of lock nuts 1' of various sizes, the distance between the guide rails 103 and 104, 105 and 106 and between the guide rail 115 and the end surface 116 of the guide rail 105 of the guideway and fastening mechanism 101 are adjustable and guide rails 105 and 106 with corresponding location plates 111 of various thicknesses are available. For lock nuts of various sizes evidently deformation mechanisms 102 in varying sizes are available as well.

## Claims

1. A method for making a self-locking nut (1; 1') by providing inwardly directed chambers (3, 3') in the flat tool surfaces (2; 2') of the nut and providing a recessed cavity (10, 10') into the wall (6; 6') of at least one inwardly directed chamber bordering the thread (5; 5'), characterized in that every recessed cavity (10, 10') is provided by radially inwardly deforming a portion of the said wall (6; 6') of the inwardly directed chamber (3, 3') by means of a radially inwardly movable deformation element (24, 25; 134).

2. A die (13) for making a self-locking nut (1; 1'), said die being provided with a polygonal cavity (14) characterized in that the die cavity (14) is provided with a set back rib (16) at one outer end of each side face (15) and in that each rib (16) is provided with a substantially convex-cylindrical surface (19).

3. A die (13) as in claim 2, characterized in that the die cavity (14) is bordered at its lower side by a truncated conical wall (17), in that the recessed ribs (16) are mainly situated upon the truncated wall (17) and the substantially convex-cylindrical surfaces (19) are provided at the side of the centerline (18), the centerlines of those cylinders being parallel to the centerline (18) of the die cavity (14).

4. A die (13) as in claim 3, characterized in that the set back ribs (16) have a convex cone-curved surface (20) at the side opposite to the truncated, conical wall (17) of the die cavity (14).

5. A die (13) as in claim 4, characterized in that the truncated cone wall (17) of the die cavity (14) has a top angle between 90° and 130°, and in that the top angle of the convex cone-curved surface (20) of the set back ribs (16) is between 100° and 140°.

6. A die (13) as in one of the claims 2—5, characterized in that the relationship between the radius of the convex-cylindrical side (19) of the set back ribs (16) and the diameter of the thread (5; 5') of the lock nut (1; 1') to be made by the die (13) is between approximately 1.5 and 2.5:3.

7. A device for providing a recessed cavity (10')

into the wall (6') of at least one inwardly directed chamber (3') in a flat tool surface (2; 2') of a nut (1'), said device comprising a mechanism (101) for mounting a nut (1') in the desired position (D) and a deformation mechanism (102) having at least one inwardly protruding deformation element (124, 134), wherein the deformation element (134) is mounted radially inwardly movably in the cylinder-shaped deformation mechanism (102), characterized in that the deformation element comprises a lever-shaped segment (124) which is pivotable in a longitudinal central plane of the nut (1') around a cross-shaft (123) in the deformation mechanism (102), said shaft being shiftable in a direction parallel to the longitudinal central plane, said segment being resiliently pretensioned at the side of the pivoting shaft (123) positioned opposite the side of the nut (1') in the rotational direction towards the longitudinal centerline (118, 119) of the nut (1') and on the other hand is secured at the interior of a chisel-shaped deformation element (134) and that the segment (124) engages the top surface of supports (105, 106) at the side positioned in front of the nut (1'), between which supports the nut (1') is locked.

8. Device as in claim 7, characterized in that the deformation mechanism (102) comprises three lever-shaped segments (124) spaced at a mutual peripheral angle of 120° in a reversed U-shaped housing (117), in that each segment (124) at its side faced away from the nut (1') is defined by a radially inwardly and upwardly inclining surface (125) which is urged at its radial inner edge (126) by a pressure plate (127), housing a pressure spring (128) between the plate (127) and the bottom (121) of the housing (117), in that at least a portion of each segment (124) and the deformation cam (134) extends beyond the bottom surface of the housing (117) and the core (122a) over a distance which is at least equal to the axial depth of the recessed cavities (10') and in that the supports comprise a pair of parallel guide rails (105, 106) for the nuts.

9. Device as in claim 8, characterized in that the housing (117) is mounted at the top punch of an excenter press and in that the guide rails (105, 106) are fastened to the bottom punch of the said press.

10. A device for providing a recessed cavity (10) into the wall (6) of at least one inwardly directed chamber (3) in the flat tool surfaces (2; 2') of a nut (1), said device being provided with a mechanism (59, 60) for positioning the nut (1) in the desired position and with a deformation mechanism (22, 24; 23, 25) with at least one inwardly protruding deformation element (24, 25), wherein the deformation mechanism (22, 24; 23, 25) comprises a pair of interspaced, synchronously and in opposite rotational direction driven wheels (22, 23), the centerlines (48, 49) thereof being parallel and their peripheries being provided with spaced radial cams (24, 25), and wherein the positioning mechanism comprises a guide (59, 60) for the lock nuts (1), characterized in that the cams (24, 25) have a partial cylindrical shape, the centerlines of said cylinders being parallel to those (48, 49) of the wheels (22, 23).

11. A device as in claim 10, characterized in that the wheels (22, 23) are mounted on parallel shafts (26, 27) mounted in a base plate (30) and in that a pair of engaging gears (37, 38) is mounted on the shafts (26, 27).

12. A device as in claim 11, characterized in that one (26) of the shafts (26, 27) is mounted in an adjustable bearing sleeve (28), which is mounted in an opening (46) in the base plate, said opening (46) having in the direction of adjustment a greater dimension than the bearing sleeve (28), and on which bearing sleeve (28) a set bolt (55) is engaging.

13. A device as in one of the claims 10—12, characterized in that the guideway for the lock nuts (1) comprise two parallel guide rails (59, 60) on the base plate (30), said guideways being parallel to the perpendicular on the connection line (47) between the centerlines (48, 49) of the cam wheels (22, 23) and in that the distance (a) between the guide rails (59, 60) corresponds with the width (w) of the lock nut (1), measured over two opposed flat tool surfaces (2).

14. A lock nut (1; 1') which is provided at its top side (B:B') at at least one flat tool surface (2:2') with a recessed cavity (10:10'), so that the thread will get a non-round shape, said nut being provided with an inwardly directed chamber (3:3'), the recessed cavity (10:10') being provided in the wall (6:6') of the chamber (3; 3') bordering the thread (5:5') and comprising a truncated cone (4; 4'), the chambers (3; 3') being substantially formed in the truncated cone (4:4') and being delimited at the side of the thread (5; 5') by a substantially cylindrical, concave wall (6; 6'), characterized in that the recessed cavity (10; 10') is formed by a radially inward movement only of a portion of the cylindrical wall (6; 6') of the chamber (3; 3') and in that the centerline (7; 7') of the chambers (3; 3') is parallel to the centerline (8; 8') of the thread (5; 5').

15. A lock nut as in claim 14, characterized in that the recessed cavity (10; 10') at its bottom side is delimited by a plane (12; 12') perpendicular to the centerline (8; 8') of the thread (5; 5') and in that the chambers (3; 3') at the bottoms are delimited by a concave cone-curved surface (9, 9').

16. A lock nut as in claim 15, characterized in that the top angle of the cone-shaped surface (9; 9') at the bottoms of the chambers (3; 3') is between 100° and 140°.

17. A lock nut as in one of the claims 14—16, characterized in that the relationship of the radius (R:R') of the cylindrical walls (6; 6') and (11; 11') respectively of the chambers (3, 3'), respectively the cavities (10; 10') and the diameter of the thread (5; 5') of the nut (1; 1') is between approximately 1.5 and 2.5:3.

**Patentansprüche**

1. Vorrichtung zur Herstellung einer selbstsichernden Mutter (1; 1') durch Anbringen einwärts gerichteten Kammern (3, 3') in den ebenen Werkzeugflächen (2; 2') der Mutter und durch Anbringen einer Vertiefung (10; 10') in die Wand (6; 6') mindestens einer einwärts gerichteten Kammer, die an das Schraubengewinde (5; 5') grenzt, dadurch gekennzeichnet, dass jede Vertiefung (10, 10') durch radial einwärts Deformieren eines Teils der obengenannten Wand (6; 6') der einwärts gerichteten Kammer (3; 3') mittels eines radial einwärts bewegenden Deformationselementes (24, 25; 134) angebracht wird.

2. Gesenk (13) zur Herstellung einer selbstsichernden Mutter (1; 1'), welches Gesenk eine vieleckige Höhlung (14) aufweist, dadurch gekennzeichnet, dass die Gesenkhöhlung (14) an einem Ende jeder Seitenfläche (15) mit einer einspringenden Rippe (16) versehen ist und dass jede Rippe (16) eine im wesentlichen konvex-zylindrische Oberfläche (19) aufweist.

3. Gesenk (13) nach Anspruch 2, dadurch gekennzeichnet, dass die Gesenkhöhlung (14) an ihrer Unterseite von einer abgestumpft-kegelförmigen Wand (17) begrenzt ist, dass die einspringenden Rippen (16) sich in der Hauptsache auf der abgestumpft-kegelförmigen Wand (17) befinden, und die im wesentlichen konvexzylindrischen Oberflächen (19) an der Seite der Achse (18) angebracht sind, wobei die Achsen dieser Zylinder parallel zur Achse (18) der Gesenkhöhlung (14) liegen.

4. Gesenk (13) nach Anspruch 3, dadurch gekennzeichnet, dass die einspringenden Rippen (16) an der Seite gegenüber der abgestumpft-kegelförmigen Wand (17) der Gesenkhöhlung (14) eine konvex-kegelförmige Oberfläche (20) haben.

5. Gesenk (13) nach Anspruch 4, dadurch gekennzeichnet, dass die abgestumpft-kegelförmige Wand (17) der Gesenkhöhlung (14) einen Scheitelwinkel zwischen 90° und 130° hat, und dass der Scheitelwinkel der konvex-kegelförmigen Oberfläche (20) der einspringenden Rippen (16) zwischen 100° und 140° liegt.

6. Gesenk (13) nach einem der Ansprüche 2—5, dadurch gekennzeichnet, dass das Verhältnis zwischen dem Radius der konvex-zylindrischen Seite (19) der einspringenden Rippen (16) und der Durchmesser des Schraubengewindes (5; 5') der mit dem Gesenk (13) herzustellenden selbstsichernden Mutter (1; 1') zwischen ungefähr 1,5 und 2,5:3 liegt.

7. Vorrichtung zum Anbringen einer Vertiefung (10') in die Wand (6') mindestens einer einwärts gerichteten Kammer (3') in einer ebenen Werkzeugfläche (2; 2') einer Mutter (1'), welche Vorrichtung ein Mechanismus (101) zum Montieren einer Mutter (1') in der gewünschten Position (D) und ein Deformationsmechanismus (102) mit mindestens einem sich einwärts erstreckenden Deformationselement (124, 134) aufweist, in dem das Deformationselement (134) radial einwärts bewegbar in dem zylindrischen Deformationsmechanismus (120) montiert ist, dadurch gekennzeichnet, dass das Deformationselement ein hebelförmiges Segment (124) umfasst, das in einer Längsmittelebene der Mutter (1') um eine Querachse (123) in dem Deformationsmechanismus (102) schwenkbar ist, welche Achse in der Richtung parallel zur Längsmittelebene verschiebbar ist, welches Segment (124) an der von der Mutter (1') abgekehrten Seite der Schwenkachse (123) in der Drehrichtung zur Längsmittellinie (118, 119) der Mutter (1') federnd vorgespannt ist, und anderseits an der Innenseite des meisselförmigen Deformationselements (134) befestigt ist und dass das Segment (124) an der der Mutter (1') zugekehrten Seite auf der Oberfläche von Stützen (105, 106) anliegt, zwischen welchen Stützen die Mutter (1') eingeschlossen ist.

8. Vorrichtung nach Anspruch 7, dadurch gekennzeichnet, dass das Deformationsmechanismus (102) drei hebelförmigen Segmenten (124) umfasst, die mit einem gegenseitigen Umfangswinkel von 120° zueinander versetzt sind in einem ungekehrt U-förmigen Gehäuse (117), dass jedes Segment (124) an seiner von der Mutter (1') abgekehrten Seite durch eine radial einwärts und aufwärts geneigte Fläche (125) begrenzt ist, die an ihrem radialen Innenrand (126) durch eine Druckplatte (127) angedrückt wird, wobei eine Druckfeder (128) zwischen der Platte (127) und dem Boden (121) des Gehäuses (117) angeordnet ist, dass mindestens ein Teil jedes Segments (124) und der Deformationsnocken (134) sich unter die Unterfläche des Gehäuses (117) und des Kerns (122a) über einen Abstand ausstrecken, der mindestens gleich der axialen Tiefe der Vertiefungen (10') ist und dass die Stützen ein Paar von parallelen Führungsschienen (105, 106) für die Muttern sind.

9. Vorrichtung nach Anspruch 8, dadurch gekennzeichnet, dass das Gehäuse (17) an den Oberstempel einer Exzenterpresse montiert ist und dass die Führungsschienen (105, 106) and den Unterstempel der Presse befestigt sind.

10. Vorrichtung zum Anbringen einer Vertiefung (10) in die Wand (6) mindestens einer einwärts gerichteten Kammer (3) in den ebenen Werkzeugflächen (2; 2') einer Mutter (1), welche Vorrichtung ein Mechanismus (59, 60) zur Positionierung der Mutter (1) in die gewünschte Position und ein Deformationsmechanismus (22, 24; 23, 25) mit mindestens einem sich einwärts erstreckenden Deformationselement (24, 25) aufweist, in der das Deformationsmechanismus (22, 24; 23, 25) ein Paar mit Abstand von einander angeordneten, synchron und in entgegengesetzten Drehrichtungen angetriebenen Räder (22, 23) umfasst, deren Achsen (48, 49) parallel sind und die am Umfang mit mit Abstand von einander angeordneten radialen Nocken (24, 25) versehen sind, und in welcher Vorrichtung das Positionierungsmechanismus eine Führung (59, 60) für die Sicherungsmuttern (1) umfasst, dadurch gekennzeichnet, dass die Nocken (24, 25) eine teilzylindrische Form haben, wobei die Achsen der Zylinder parrallel zu denen (48, 49) der Räder (22, 23) sind.

11. Vorrichtung nach Anspruch 10, dadurch gekennzeichnet, dass die Räder (22, 23) auf parallellen Achsen (26, 27) montiert sind, die in einer Grundplatte (30) montiert sind und dass auf die Achsen (26, 27) ein Paar im Eingriff stehende Zahnräder (37, 38) montiert sind.

12. Vorrichtung nach Anspruch 11, dadurch gekennzeichnet, dass eine (26) der Achsen (26, 27) in einer verstellbaren Lagerungshülse (28) montiert ist, die in einer Öffnung (46) der Grundplatte montiert ist, welche Öffnung (46) in der Verstellrichtung eine grössere Dimension als die Lagerungshülse (28) hat, und auf welche Lagerungshülse (28) ein Stellbolzen (55) einwirkt.

13. Vorrichtung nach einem der Ansprüche 10—12, dadurch gekennzeichnet, dass die Führung für die Sicherungsmuttern (1) aus zwei parallellen Führungsschienen (59, 60) auf der Grundplatte (30) besteht, die parallel zu der Senkrechten (61) zur Verbindungslinie (47) zwischen den Achsen (48, 49) der Nockenräder (22, 23) sind und dass der Abstand (a) zwischen den Führungsschienen (59, 60) mit der Breite (w) der Sicherungsmutter (1), gemessen über zwei gegenüber einander liegenden ebenen Werkzeugflächen (2), übereinstimmt.

14. Sicherungsmutter (1; 1') die an der Oberseite (B:B') an mindestens einer ebenen Werkzeugfläche (2:2') mit einer Vertiefung (10:10') versehen ist, so dass das Schraubengewinde eine unrunde Form bekommt, welche Mutter mit einer einwärts gerichteten Kammer (3:3') versehen ist, wobei die Vertiefung (10:10') in der Wand (6; 6') der Kammer (3:3') angebracht ist, die an dem Schraubengewinde (5:5') grenzt, und eine abgestumpft-kegelförmige Fläche (4; 4') hat, wobei die Kammern (3:3') hauptsächlich in dem abgestumpften Kegel (4; 4') gebildet sind und an der Seite des Schraubengewindes (5; 5') von einer hauptsächlich zylindrischen, konkaven Wand (6; 6') begrenzt sind, dadurch gekennzeichnet, dass die Vertiefung (10; 10') nur durch eine radiale Einwärtsbewegung eines Teils der zylindrischen Wand (6; 6') der Kammer (3; 3') gebildet ist, und dass die Achse (7; 7') der Kammern (3; 3') parallel zur Achse (8; 8') des Schraubengewindes (5; 5') ist.

15. Sicherungsmutter nach Anspruch 14, dadurch gekennzeichnet, dass die Vertiefung (10; 10') an ihrer Unterseite von einer Fläche (12; 12') senkrecht zur Achse (8; 8') des Schraubengewindes (5; 5') begrenzt ist und dass die Kammern (3; 3') an ihren Böden von einer konkaven kegelförmigen Fläche (9, 9') begrenzt sind.

16. Sicherungsmutter nach Anspruch 15, dadurch gekennzeichnet, dass der Scheitelwinkel der kegelförmigem Fläche (9; 9') an den Böden der Kammern (3; 3') zwischen 100° und 140° liegt.

17. Sicherungsmutter nach einem der Ansprüche 14—16, dadurch gekennzeichnet, dass das Verhältnis des Radius (R:R') der zylindrischen Wände (6; 6') bzw. (11; 11') der Kammern (3, 3'), bzw. der Vertiefungen (10; 10') zum Durchmesser des Schraubengewindes (5; 5') der Mutter (1; 1') zwischen ungefähr 1,5 und 2,5:3 liegt.

**Revendications**

1. Procédé pour fabriquer un écrou à autoblocage (1; 1') en réalisant des alvéoles (3; 3') orientées vers l'intérieur dans les faces plates de manoeuvre (2; 2') de l'écrou et en réalisant une cavité évidée (10; 10') à l'intérieur de la paroi (6; 6') d'au moins une alvéole orientée vers l'intérieur en bordure de la partie taraudée (5; 5'), caractérisé en ce que chaque cavité évidée (10; 10') est réalisée par une déformation vers l'intérieur, dans le sens radial, d'une partie de ladite paroi (6; 6') de l'alvéole (3; 3') orientée vers l'intérieur au moyen d'un élément déformateur (24, 25; 134) mobile vers l'intérieur dans le sens radial.

2. Matrice (13) destinée à fabriquer un écrou à autoblocage (1; 1'), ladite matrice étant pourvue d'une cavité polygonale (14), caractérisée en ce que la cavité (14) de la matrice est munie d'une nervure en relief (16) située à une extrémité extérieure de chaque face latérale (15) et en ce que chaque nervure (16) est pourvue d'une surface (19) sensiblement cylindrique et convexe.

3. Matrice (13) selon la revendication 2, caractérisée en ce que la cavité (14) de la matrice est bordée à l'endroit de son côté inférieur par une paroi (17) en cône tronqué, en ce que les nervures en relief (16) sont principalement situées sur la paroi tronquée (17) et les surfaces (19) sensiblement cylindriques et convexes sont disposées du côté de l'axe (18), les axes de ces cylindres étant parallèles à l'axe (18) de la cavité (14) de la matrice.

4. Matrice (13) selon la revendication 3, caractérisée en ce que les nervures en relief (16) comportent une surface convexe (20) à courbure conique située du côté opposé la paroi (17) en cône tronqué de la cavité (14) de la matrice.

5. Matrice (13) selon la revendication 4, caractérisée en ce que la paroi (17) en cône tronqué de la cavité (14) de la matrice a un angle au sommet compris entre 90° et 130°, et en ce que l'angle au sommet de la surface convexe (20) à courbure conique des nervures en retrait (16) est compris entre 100° et 140°.

6. Matrice (13) selon l'une des revendications 2 à 5, caractérisée en ce que le rapport du rayon du côté (19) cylindrique et convexe des nervures en relief (16) au diamètre de la partie taraudée (5; 5') de l'écrou de blocage (1; 1') devant être fabriqué par la matrice (13) est compris approximativement entre 1,5 et 2,5:3.

7. Appareil destiné à réaliser une cavité évidée (10') à l'intérieur de la paroi (6') d'au moins une alvéole (3') orientée vers l'intérieur et située dans une face plate de manoeuvre (2; 2') d'un écrou (1'), ledit appareil comportant un mécanisme (101) destiné à installer en écrou (1') à la position désirée (D) et un mécanisme déformateur (102) possédant au moins un élément déformateur (124, 134) faisant saillie vers l'intérieur, dans lequel l'élément déformateur (134) est monté dans le mécanisme déformateur (102) de forme cylindrique avec la faculté de se déplacer vers l'intérieur dans le sens radial, caractérisé en ce que l'élément déformateur comporte un segment en forme de levier (124) qui d'une part peut pivoter dans un plan longitudinal central de l'écròu (1') autour d'un arbre transversal (123) situé dans le mécanisme déformateur (102), ledit arbre étant susceptible d'être déplacé dans une direction parallèle au plan longitudinal central, ledit segment étant précontraint de manière élastique du côté de l'arbre de pivotement (123) qui est placé à l'opposé du côté de l'écrou (1') dans le sens de rotation orienté vers l'axe longitudinal (118, 119) de l'écrou (1') et qui d'autre part est assujetti à l'intérieur d'un élément déformateur (134) en forme de ciseau et en ce que le segment (124) vient en contact avec la face supérieure de supports (105, 106) sur le côté positionné en face de l'écrou (1'), supports entre lesquels l'écrou (1') est bloqué.

8. Appareil selon la revendication 7, caractérisé en ce que le mécanisme déformateur (102) comporte trois segments (124) en forme de leviers espacés mutuellement d'un angle périphérique de 120° et situés dans un logement (117) en forme de U renversé, en ce que chaque segment (124) est délimité au droit de celui de ses côtés qui est à l'opposé de l'écrou (1') par une surface (125) inclinée vers l'intérieur dans le sens radial et vers le haut, surface qui est pousée au droit de son bord (126) intérieur dans le sens radial par une plaque de pression (127), logeant un ressort de compression (128) entre la plaque (127) et le fond (122) du logement (117), en ce qu'une partie au moins de chaque segment (124) et la came déformatrice (134) s'étendent au-delà de la surface de base du logement (117) et du noyau (122a) nur une distance qui est au moins égale à la profondeur dans le sens axial des cavités évidées (10') et en ce que les supports comportent une paire de rails de guidage parallèles (105, 106) destinés aux écrous.

9. Appareil selon la revendication 8, caractérisé en ce que le logement (117) est monté sur le poinçon du haut d'une presse excentrique et en ce que les rails de guidage (105, 106) sont assujettis au poinçon du bas de ladite presse.

10. Appareil destiné à réaliser une cavité évidée (10) à l'intérieur de la paroi (6) d'au moins une alvéole (3) orientée vers l'intérieur et située dans les faces plates de manoeuvre (2; 2') d'un écrou (1), ledit appareil étant pourvu d'un mécanisme (59, 60) destiné à positionner l'écrou (1) à la position désirée et d'un mécanisme déformateur (22, 24; 23, 25) comportant au moins un élément déformateur (24, 25) faisant saillie vers l'intérieur, dans lequel le mécanisme déformateur (22, 24; 23, 25) comporte une paire de disques (22, 23) espacés l'un de l'autre, et entraînés de manière synchrone dans des sens se rotation opposés, les axes (48, 49) de ces disques étant parallèles et leurs périphéries étant munies de cames radiales espacées (24, 25), et dans lequel le mécanisme de positionnement comporte un guide (59, 60) destiné aux écrous de blocage (1), caractérisé en ce que ces cames (24, 25) ont une forme partiellement cylindrique, les axes desdits cylindres étant parallèles à ceux (48, 49) des disques (22, 23).

11. Appareil selon la revendication 10, caractérisé en ce que les disques (22, 23) sont montés sur des arbres parallèles (26, 27) montés sur une plaque de base (30) et en ce qu'une paire de pignons engrenés (37, 38) est montée sur les arbres (26, 27).

12. Appareil selon la revendication 11, caractérisé en ce que l'un (26) des arbres (26, 27) est monté dans un palier lisse réglable (28), qui est monté dans une ouverture (46) ménagée dans la plaque de base, ladite ouverture (46) ayant dans la direction du réglage une dimension plus grande que le palier lisse (28), et palier lisse (28) avec lequel vient en contact un boulon de réglage (55).

13. Appareil selon l'une des revendications 10 à 12, caractérisé en ce que le passage formant guide destiné aux écrous de blocage (1) comporte deux rails de guidage parallèles (59, 60) situés sur la plaque de base (30), ledit passage formant guide étant parallèle à la perpendiculaire à la ligne (47) reliant les axes (48, 49) des disques (22, 23) à cames et en ce que la distance (a) entre les rails de guidage (59, 60) correspond à la largeur (w) de l'écrou de blocage (1), mesurée entre deux faces plates de manoeuvre (2) opposées.

14. Ecrou de blocage (1; 1') qui comporte sur son côté du haut (B; B') au droit d'au moins une face plate de manoeuvre (2; 2') une cavité évidée (10; 10'), si bien que la partie taraudée prendra une forme non circulaire, ledit écrou étant pourvu d'une alvéole orientée vers l'intérieur (3; 3'), la cavité évidée (10; 10') étant ménagée dans la paroi (6; 6') de l'alvéole (3; 3') en bordure de la partie taraudée (5; 5') et comportant un cône tronqué (4; 4'), les alvéoles (3; 3') étant essentiellement ménagées dans le cône tronqué (4; 4') et étant délimitées du côté de la partie taraudée (5, 5') par une paroi concave sensiblement cylindrique (6; 6'), caractérisé en ce que la cavité évidée (10; 10') est réalisée par un déplacement vers l'intérieur, dans le sens radial d'une partie seulement de la paroi cylindrique (6; 6') de l'alvéole (3; 3') et en ce que l'axe (7; 7') des alvéoles (3; 3') est parallèle à l'axe (8; 8') de la partie taraudée (5; 5').

15. Ecrou de blocage selon la revendication 14, caractérisé en ce que la cavité évidée (10; 10') est délimitée du côté de sa base par un plan (12; 12') perpendiculaire à l'axe (8; 8') de la partie taraudée (5; 5') et en ce que les alvéoles (3; 3') sont délimitées à leurs bases par une surface concave à courbure de cône (9; 9').

16. Ecrou de blocage selon la revendication 15, caractérisé en ce que l'angle au sommet de la surface en forme de cône (9; 9') située à la base des alvéoles (3; 3') est compris entre 100° et 140°.

17. Ecrou de blocage selon l'une des revendications 14 à 16, caractérisé en ce que le rapport du rayon (R; R') des parois cylindriques (6; 6') et (11; 11') correspondant respectivement aux alvéoles (3; 3') et aux cavités (10; 10') au diamètre de la partie taraudée (5; 5') de l'écrou (1; 1') est compris approximativement entre 1,5 et 2,5:3.

FIG.1

FIG.2

FIG.3

FIG.4

FIG.5

FIG. 6

FIG. 7

FIG. 8

FIG.11

FIG. 9

FIG. 10